Europäisches Patentamt

European Patent Office

Office européen des brevets

(11) Publication number: **0 082 897**
**B1**

## EUROPEAN PATENT SPECIFICATION

(45) Date of publication of patent specification: **02.04.86**

(51) Int. Cl.⁴: **C 03 B 37/16**

(21) Application number: **81306160.3**

(22) Date of filing: **30.12.81**

(54) **Tool for cutting optical fibres.**

(43) Date of publication of application:
**06.07.83 Bulletin 83/27**

(45) Publication of the grant of the patent:
**02.04.86 Bulletin 86/14**

(84) Designated Contracting States:
**BE DE FR GB IT NL**

(56) References cited:
**US-A-4 118 862**
**US-A-4 154 385**

**IBM TECHNICAL DISCLOSURE BULLETIN Vol.
22, No. 7, December 1979 New York D.H.
COFFMAN "Low-cost Glass Fiber Cutter" pages
2629 to 2630**

(73) Proprietor: **AMP INCORPORATED**
**P.O. Box 3608 449 Eisenhower Boulevard
Harrisburg Pennsylvania 17105 (US)**

(72) Inventor: **Johnson, Erlon Fitch
617 East Hummelstown Street
Elizabethtown Pennsylvania 17022 (US)**

(74) Representative: **Gray, Robin Oliver et al
BARON & WARREN 18 South End Kensington
London W8 5BU (GB)**

Courier Press, Leamington Spa, England.

## Description

The present invention relates to an improved tool, and more particularly a hand tool, for performing the scribe-and-break technique and a method employed to cut optical fibers which yields fiber ends that are smooth, flat, and perpendicular to the fiber axis.

To achieve efficient transmission of energy light signals through an optical fiber splice, the fiber ends must be smooth, flat, and perpendicular to the fiber axis. It is generally known that the scribe-and-break technique adequately yields the desired fiber ends. Basically, this technique involves stretching an optical fiber over an arcuate surface and lightly scribing the fiber with a sharp edge to produce a fracture which is diametrically propagated through the fiber to produce the requisite end surface.

Hand tools currently in use to scribe-and-break optical fibers are both complicated in design, that is, having many moving parts, and expensive. See, for example, U.S. Patent Nos. 4,154,385; 4,159,793; 4,168,026; and 4,202,475. Since such tools are likely to be used in harsh field environments, with each tool expected to withstand repeated duty cycles, it is therefore imperative that their construction be durable, and readily repairable. Moreover, it is desirable for scribe-and-break tools to be of simple design, and accordingly inexpensive, since loss of tools in field applications is not uncommon.

US—A—4 154 385 discloses a tool for scribing and breaking an optical fiber, of the type comprising a scribing member for scribing said fiber in a scribing plane, a fiber supporting member having an arcuately-convex profiled surface for supporting and transporting a length of said fiber toward the scribing member in an axially normal intersection of said scribing plane, frame means supporting the scribing member and a fiber tensioning member for placing said length of fiber in axial tension.

It is an object to provide a tool for scribing and breaking an optical fiber which results in a smooth, flat perpendicular end, which is relatively simple in design with few moving parts, and which can be readily and economically manufactured.

According to the invention a tool having the features known from US—A—4 154 385 is characterised in that said fiber tensioning member comprises a spring member having gripping portions disposed on opposite sides of said scribing plane and facing said convex surface, said gripping portions being conformable to said convex profiled surface for incrementally and directionally pressuring portions of said fiber length on opposite sides of said scribing plane against said arcuate convex surface and away from said scribing plane as said fiber is transported into engagement against said scribing member, thereby cooperating with said frame means and imparting an axial tension into said length of fiber.

The invention also includes a method of scrib-ing and breaking a fiber optic member comprising the steps of placing the fiber optic member onto an arcuate convex supporting surface adjacent a scribing member, moving said arcuate convex supporting surface and said fiber optic member thereon and said scribing member relative to one another, maintaining said fiber optic member in position on said arcuate convex supporting surface during movement thereof, characterised by placing said fiber optic member under clamping engagement to said supporting surface at two spaced clamping positions proximate each other thereby tensing the fiber optic member by bending about the arcuate surface between the two positions, and scribing said tensed fiber optic member with said scribing member between said two positions, thereby breaking said fiber optic member.

IBM Technical Disclosure Bulletin, Vol. 22, No. 7, December, 1979 discloses a low cost glass fiber cutter comprising a spring member having at one end a fiber clamp and between opposed portions a further fiber clamp of which one part comprises an arcuate fiber supporting surface. A cutter is positioned between the clamps for engaging a clamped fiber. The arrangement is such that on flexure of opposed spring portions together the fiber is tensioned and the tensioned fiber is engaged by the cutter to break the fiber.

The invention will now be described by way of example, with reference to the accompanying diagrammatic drawings, in which:

FIGURE 1 is an exploded perspective view of an optical fiber scribe-and-break tool in accordance with the present invention.

FIGURE 2 is a perspective view of a fully assembled optical fiber scribe-and-break tool in accordance with the present invention.

FIGURE 3 is a section through the tool showing an optical fiber in place prior to actuation of the tool.

FIGURE 4 is a section through the tool showing the compressed U-shaped free ends clamping and tensioning an optical fiber.

FIGURE 5 is a section through the tool showing an optical fiber in the scribing position.

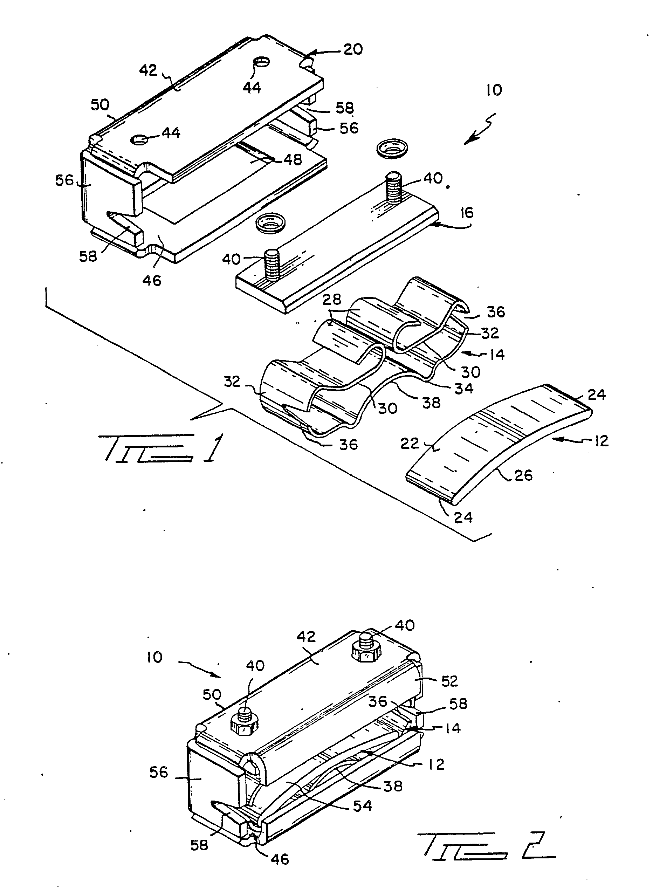

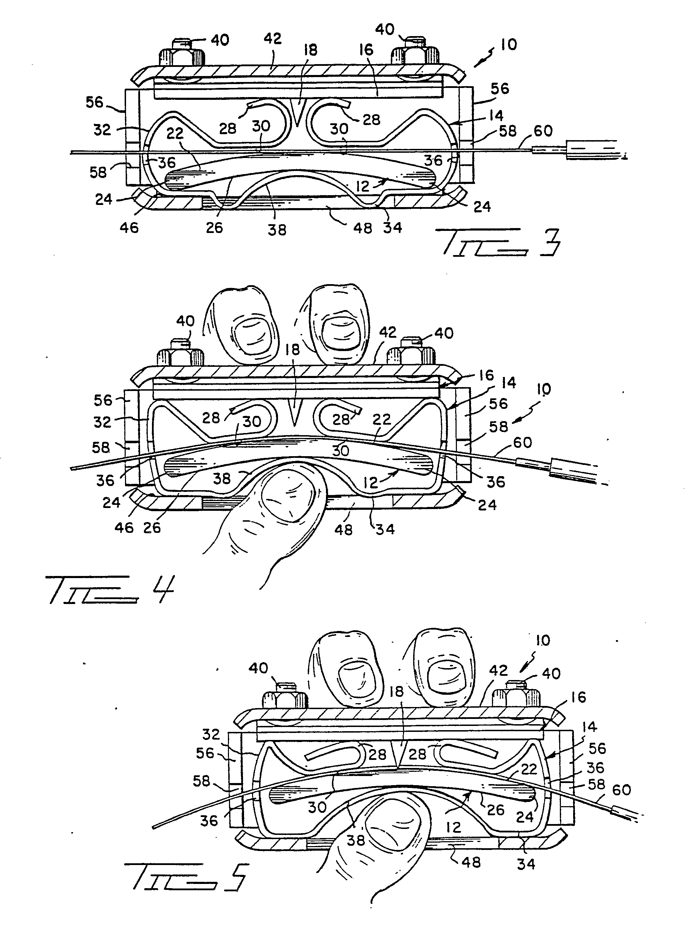

A hand tool 10 for cutting optical fibers by the scribe-and-break technique in accordance with the present invention, Figures 1 and 2, comprises an anvil 12, a spring member 14, a bearing surface 16 having a scribing edge 18 centrally mounted thereon (see Figure 3), and a prismoidal frame 20. The anvil 12 has a fiber supporting surface 22 of arcuate convex shape extending between opposite ends 24, and a second surface 26 opposed to the fiber supporting surface 22.

The spring member 14 is an elongated plate formed to surround the anvil 12 having U-shaped free ends 28 located on opposite sides of a scribing plane defined by the scribing edge 18. The spring member 14 extends symmetrically from the scribing plane to gripping portions 30, then to end portions 32 which wrap around the opposite ends 24 of the anvil 12, and finally to a longitudinal portion 34 which is located adjacent to the second surface 26 of the anvil 12. Each end portion 32 has a fiber receiving slot 36, and the longitudinal portion 34 has a deformable concave portion 38.

The bearing surface 16, which faces the fiber supporting surface 22 with the spring member U-shaped free end portions 28 therebetween, has adjustable mounting means 40 such as a pair of nut, bolt and resilient washer assemblies as shown or an equivalent substitute familiar to those skilled in the art.

The prismoidal frame 20 encloses the anvil 12, spring member 14, and bearing surface 16. The frame 20 has a top side 42 having a pair of holes 44 to accept the mounting means 40, a bottom side having an aperture 48 large enough to provide thumb or finger access, a back side 50, and a front side 52 having a slot 54 through its entire length. The frame 20 also has opposed ends 56 each having a fiber receiving slot 58.

Referring to Figure 3, the operation of cutting an optical fiber is initiated by inserting the optical fiber 60 through the front side slot 54 and into the spring member fiber receiving slots 36 and the frame end fiber receiving slots 58. Optionally, either the spring member fiber receiving slots 36 or the frame end fiber receiving slots 58 are designed to transversely align the optical fiber 60 on the fiber supporting surface 22. During insertion of the optical fiber 60, the spring member 14 is in an unactuated condition.

Referring to Figure 4, the spring member 14 is actuated by application of a normal force, using a thumb or finger, to the deformable concave portion 38. This forces causes the anvil 12 to move relatively toward the bearing surface 16 and scribing edge 18, compressing the spring member U-shaped free end portions 28 between the bearing surface 16 and the fiber supporting surface 22. As the free end portions 28 are compressed, the gripping portions 30 clamp the optical fiber 60 to the fiber supporting surface 22. Additionally, in resisting compression, the U-shaped end portions 28 move in opposite directions away from the scribing plane as the gripping portions 30 slide longitudinally along the fiber supporting surface 22, imparting an axial tensile stress to the optical fiber 60.

This process continues until the optical fiber 60 is brought into contact with the scribing edge 18, as in Figure 5. At this point, the optical fiber 60 is under both a bending and axial tensile stress which yields a net decreasing tensile stress across the fiber cross section. The optical fiber 60 is lightly scribed by the scribing edge 18, resulting in propagation of a fracture. The scribing edge 18 can be rotated slightly about the scribing plane using the adjustable mounting means 40. Such adjustment may be critical in achieving a clean fracture, especially after the scribing edge 18 has been worn from use. Further, the scribing edge 18 can be replaced when worn beyond use simply by dismounting the bearing surface 16 from the top side 42 and installing a new one.

## Claims

1. A tool for scribing and breaking an optical fiber (60), of the type comprising a scribing member (18) for scribing said fiber in a scribing plane, a fiber supporting member (12) having an arcuately convex profiled surface (22) for supporting and transporting a length of said fiber toward the scribing member (18) in an axially normal intersection of said scribing plane, frame means (20) supporting the scribing member (18) and a fiber tensioning member (14) for placing said length of fiber in axial tension, characterised in that said fiber tensioning member (14) comprises a spring member having gripping portions (30) disposed on opposite sides of said scribing plane and facing said convex surface (22), said gripping portions (30) being conformable to said convex profiled surface (22) for incrementally and directionally pressuring portions of said fiber length on opposite sides of said scribing plane against said arcuate convex surface (22) and away from said scribing plane as said fiber is transported into engagement against said scribing member (18), thereby cooperating with said frame means and imparting an axial tension into said length of fiber.

2. A tool as set forth in claim 1, characterised in that said spring member (14) comprises compressive spring elements (28) having said gripping portions (30) and being disposed on opposite sides of said scribing plane and placed in compression between said portions of said fiber length and bearing surface (16) mounted in said frame means (20) as said fiber (60) is transported into engagement against said scribing member (18) thus forcing said gripping portion (30) to conform to said profiled surface (22).

3. A tool as set forth in claim 1, characterised in that said spring elements (28) each comprise a reversely-formed-U-shaped plate member.

4. A tool as set forth in claim 3, characterised in that said spring member (14) comprises an elongated plate member which is formed to surround said convex profiled surface (22) and includes said spring elements (28) at free ends thereof and further includes end portions (32) around opposite ends (34) of said convex profiled surface (22) and has a transversely directed optical fiber-receiving slot (36) formed therein to access an optical fiber (60) onto said convex profiled surface (22).

5. A tool as set forth in claim 4, characterised in that said elongate plate member (14) further comprises a flexible longitudinal portion (34, 38) located adjacent and beneath said convex surface (22), and adapted to deform upwardly to influence said convex fiber-supporting surface (22) toward said scribing member (18).

6. A method of scribing and breaking a fiber optic member (60) comprising the steps of placing the fiber optic member (60) onto an arcuate convex supporting surface (22) adjacent a scribing member (18), moving said arcuate convex supporting surface (22) and said fiber optic member (60) thereon and said scribing member (18) relative to one another, maintaining said fiber optic member (60) in position on said arcuate convex supporting surface (22) during movement thereof, characterised by placing said fiber optic member (60) under clamping engagement to said supporting surface (22) at two spaced clamping positions proximate each other thereby tensing the fiber optic member (60) by bending about the arcuate surface (22) between the two positions and scribing said tensed fiber optic member (60) with said scribing member (18) between said two positions, thereby breaking said fiber optic member (60). ·

7. A method as claimed in claim 6, characterised in that said fiber optic member (60) is placed under axial tension by moving said clamping positions away from each other during relative movement of the supporting surface (22) and the scribing member (18).

## Patentansprüche

1. Werkzeug zum Ritzen und Brechen einer optischen Faser (60), mit einem Ritzelement (18) zum Ritzen der Faser in einer Ritzebene, einem Fasertragelement (12) mit einer bogenförmig konvex profilierten Fläche (22) zum Tragen und Transportieren eines Stückes der Faser zum Ritzelement (18) hin in einem axial senkrechten Schnitt zur Ritzebene, ferner Rahmeneinrichtungen (20) zur Halterung des Ritzelements (18) und ein Faserspannungselement (14), welches das Faserstück in axiale Zugspannung versetzt, dadurch gekennzeichnet, daß das Faserspannelement (14) ein Federelement umfaßt, welches Greifabschnitte (30) aufweist, die an entgegengesetzten Seiten der Ritzebene angeordnet und der konvexen Fläche (22) zugewandt sind, daß die Greifabschnitte (30) an die konvex profilierte Fläche (22) anpaßbar sind, um Abschnitte des Faserstückes inkremental und richtungsmäßig an entgegengesetzten Seiten der Ritzebene gegen die bogenförmig konvexe Fläche (22) zu pressen, sowie weg von der Ritzebene, während die Faser in Eingriff gegen das Ritzelement (18) gebracht wird, wodurch zusammenwirkend mit den Rahmeneinrichtungen eine axiale Zugspannung auf das Faserstück ausgeübt wird.

2. Werkzeug nach Anspruch 1, dadurch gekennzeichnet, daß das Federelement (14) zusammendrückbare Federelemente (28) umfaßt, welche die Greifabschnitte (30) aufweisen und an entgegengesetzten Seiten der Ritzebene angeordnet und zwischen den Abschnitten des Faserstücks und der auf den Rahmeneinrichtungen (20) angebrachten Lagerfläche (16) komprimiert sind, während die Faser (60) in Eingriff gegen das Ritzelement (18) gebracht wird, wodurch der Greifabschnitt (30) gezwungen wird, sich der profilierten Fläche (22) anzupassen.

3. Werkzeug nach Anspruch 1, dadurch gekennzeichnet, daß die Federelemente (28) jeweils ein umgekehrt geformtes, U-förmiges Plattenelement umfassen.

4. Werkzeug nach Anspruch 3, dadurch gekennzeichnet, daß das Federelement (14) ein langgestrecktes Plattenelement umfaßt, das derart geformt ist, daß es die konvex profilierte Fläche (22) umgibt und an ihren freien Enden die Federelemente (28) aufweist, sowie ferner Endabschnitte (32) um entgegengesetzte Enden (34) der konvex profilierten Fläche (22) herum, und ferner einen quer ausgerichteten Aufnahmeschlitz (36) für die optische Faser aufweist, um einer optischen Faser (60) zu der konvex profilierten Fläche (22) Zutritt zu geben.

5. Werkzeug nach Anspruch 4, dadurch gekennzeichnet, daß das langgestreckte Plattenelement (14) überdies einen flexiblen längslaufenden Abschnitt (34, 38) aufweist, der in der Nähe und unterhalb der konvexen Fläche (22) angeordnet und dazu ausgebildet ist, daß er sich nach oben verformt, um die konvexe Fasertragfläche (22) zum Ritzelement (18) hin zu drängen.

6. Verfahren zum Ritzen und Brechen eines faseroptischen Elements (60), bei dem das faseroptische Element (60) auf eine bogenförmig konvexe Tragfläche (22) in der Nähe eines Ritzelements (18) gebracht wird, dann die bogenförmig konvexe Tragfläche (22) und das darauf befindliche faseroptische Element (60) und das Ritzelement (18) relativ zueinander bewegt werden, wobei das faseroptische Element (60) in seiner Stellung auf der bogenförmig konvexen Tragfläche (22) während dessen Bewegung gehalten wird, dadurch gekennzeichnet, daß das faseroptische Element (60) unter Klemmeingriff an der Tragfläche (22) an zwei im Abstand nahe zueinander angeordneten Klemmpositionen angeordnet wird, wodurch das faseroptische Element (60) dadurch unter Zugspannung versetzt wird, daß es um die bogenförmige Fläche (22) zwischen den beiden Positionen gebogen wird, und daß das gespannte faseroptische Element (60) mit dem Ritzelement (18) zwischen den beiden Positionen geritzt wird, wodurch das faseroptische Element (60) zerbrochen wird.

7. Verfahren nach Anspruch 6, dadurch gekennzeichnet, daß das faseroptische Element (60) dadurch unter axiale Zugspannung versetzt wird, daß die Klemmpositionen während der Relativbewegung der Tragfläche (22) und des Ritzelements (18) voneinander weg bewegt werden.

## Revendications

1. Outil pour tracer et casser une fibre optique (60), du type comprenant un élément de traçage (18) destiné à tracer ladite fibre dans un plan de traçage, un élément (12) de support de fibre présentant une surface profilée (22) à courbure convexe destinée à supporter et transporter une longueur de ladite fibre vers l'élément de traçage (18), en intersection axialement normale dudit plan de traçage, des moyens de bâti (20) supportant l'élément de traçage (18) et un élément (14) de tension de la fibre destiné à placer ladite longueur de fibre sous une tension axiale, caractérisé en ce que ledit élément (14) de tension de fibre comprend un élément à ressort comportant des parties de prise (30) disposées sur des côtés opposés dudit plan de traçage et faisant face à ladite surface convexe (22), lesdites parties de prise (30) pouvant épouser ladite surface à profil convexe (22) pour comprimer progressivement et directionnellement des tronçons de ladite longueur de fibre sur des côtés opposés dudit plan de traçage, contre ladite surface (22) à courbure convexe et en s'éloignant dudit plan de traçage pendant que ladite fibre est amenée en contact avec ledit élément de traçage (18), de façon à coopérer avec lesdits moyens de bâti et à communiquer une tension axiale à ladite longueur de fibre.

2. Outil selon la revendication 1, caractérisé en ce que ledit élément à ressort (14) comprend des organes à ressort de compression (28) comportant lesdites parties de prise (30) et disposés sur des côtés opposés dudit plan de traçage, et placés en compression entre lesdites parties de ladite longueur de fibre et une surface d'appui (16) montée dans lesdits moyens de bâti (20) pendant que ladite fibre (60) est amenée en contact contre ledit élément de traçage (18), obligeant ainsi ladite partie de prise (30) à épouser ladite surface profilée (22).

3. Outil selon la revendication 1, caractérisé en ce que lesdits éléments à ressort (28) comprennent chacun une plaque en forme de U retourné.

4. Outil selon la revendication 3, caractérisé en ce que ledit élément à ressort (14) comprend une plaque allongée qui est formée de façon à entourer ladite surface (22) à profil convexe et qui comprend lesdits éléments à ressort (28) à ses extrémités libres et, en outre, des parties extrêmes (32) entourant des extrémités opposées (34) de ladite surface (22) à profil convexe, et une fente (36) de réception de fibre optique orientée transversalement, formée dans cet élément (14) afin de permettre à une fibre optique (60) d'accéder sur ladite surface (22) à profil convexe.

5. Outil selon la revendication 4, caractérisé en ce que ladite plaque allongée (14) comprend en outre une partie longitudinale flexible (34, 38) située à proximité immédiate et au-dessous de ladite surface convexe (22), et conçue pour être déformée vers le haut afin de déplacer ladite surface convexe (22) de support de fibre vers ledit élément de traçage (18).

6. Procédé pour tracer et casser un élément à fibre optique (60), comprenant les étapes qui consistent à placer l'élément à fibre optique (60) sur une surface (22) de support à courbure convexe, à proximité immédiate d'un élément de traçage (18), à déplacer mutuellement ladite surface (22) de support à courbure convexe et ledit élément à fibre optique (60) qu'elle porte ainsi que ledit élément (18) de traçage, à maintenir ledit élément à fibre optique (60) en position sur ladite surface (22) de support à courbure convexe pendant son mouvement, caractérisé en ce qu'il consiste à placer ledit élément à fibre optique (60) en contact de serrage sur ladite surface (32) de support en deux positions de serrage espacées, proches l'une de l'autre, de manière à tendre l'élément à fibre optique (60) en le cintrant sur la surface courbe (22) entre les deux positions, et à tracer ledit élément à fibre optique tendu (60) à l'aide dudit élément de traçage (18) entre lesdites deux positions, de manière à casser ledit élément à fibre optique (60).

7. Procédé selon la revendication 6, caractérisé en ce que ledit élément à fibre optique (60) est placé sous une tension axiale par éloignement l'une de l'autre desdites positions de serrage pendant le mouvement relatif de la surface (22) de support et de l'élément de traçage (18).

FIG. 1

FIG. 2

# 0 082 897

Fig. 3

Fig. 4

Fig. 5